# EUROPEAN PATENT APPLICATION

(11) **EP 4 661 556 A1**
(43) Date of publication of application: **10.12.2025**
(21) Application number: 23919038.2
(22) Date of filing: 01.02.2023
(51) Int. Cl.: H04W 72/231

(54) **METHOD AND APPARATUS FOR TRANSMITTING CAPABILITY INFORMATION, AND READABLE STORAGE MEDIUM**

(71) Applicant: Beijing Xiaomi Mobile Software Co., Ltd., Beijing 100085 (CN)
(72) Inventor: ZHOU, Rui, Beijing 100085 (CN); TAO, Xuhua, Beijing 100085 (CN)
(74) Representative: Dehns Germany Partnerschaft mbB
(86) International application number: PCT/CN2023/074154
(87) International publication number: WO 2024/159460

(57) **Abstract**

Provided in the present disclosure are a method and apparatus for transmitting capability information, and a readable storage medium. The method comprises: sending capability information to a first network device corresponding to a serving cell, wherein the capability information corresponds to the capability of a user equipment to measure the serving cell and a non-serving cell at the same time-domain position. In the method of the present disclosure, a user equipment sends capability information to a first network device of a serving cell, so as to report the capability of the user equipment itself to measure the serving cell and a non-serving cell at the same time-domain position. Therefore, the first network device can adaptively schedule the user equipment according to the capability information of the user equipment, so as to improve the rationality and accuracy of scheduling.

## Description

### TECHNICAL FIELD

The present disclosure relates to wireless communication technology, and more particularly to a method and apparatus for transmitting capability information, and a readable storage medium.

### BACKGROUND

In 3GPP Release 17 (Rel-17 or R17), measurement on a non-serving cell with a different physical cell identification (Cell with Different PCI, CDP) was introduced to achieve measurement of layer 1 (L1) parameters of the non-serving cell with the different physical cell ID (PCI).

In R18, multi-reception (multi-RX) measurement capability was introduced, namely the capability of simultaneously measuring incoming waves from different directions by User Equipment (UE).

### SUMMARY

The present disclosure provides a method and apparatus for transmitting capability information, and a readable storage medium.

In a first aspect, the present disclosure provides a method for sending capability information, which is performed by a user equipment, and the method includes:
sending capability information to a first network device corresponding to a serving cell, where the capability information corresponds to a capability of the user equipment to measure the serving cell and a non-serving cell at the same time domain position.

In the method of the present disclosure, the user equipment sends capability information to the first network device of the serving cell to report its own capability of measuring the serving cell and the non-serving cell at the same time domain position, so that the first network device can adaptively schedule the user equipment according to the capability information of the user equipment so as to improve rationality and accuracy of the scheduling.

In some possible implementations, the sending capability information to the first network device corresponding to the serving cell includes:
sending radio resource control (RRC) signaling to the first network device, where the RRC signaling includes the capability information.

In some possible implementations, the capability information includes a set bit, and the set bit is used to indicate whether the user equipment supports a first capability of measuring the serving cell and the non-serving cell at the same time domain position.

In some possible implementations, the capability information includes a distance threshold, and the distance threshold is used to indicate that when a distance between the first network device and a second network device corresponding to the non-service cell is less than or equal to the distance threshold, the user equipment supports the first capability of measuring the service cell and the non-service cell at the same time domain position.

In some possible implementations, the method further includes:
receiving first configuration information sent by the first network device, where the first configuration information includes resource configuration for performing serving cell measurement and non-serving cell measurement at the same time domain position; and
according to the first configuration information, receiving and measuring a reference signal of the serving cell using a first receiving beam, and receiving and measuring a reference signal of the non-serving cell using a second receiving beam at the same time domain position.

In some possible implementations, the method further includes:
receiving second configuration information sent by the first network device, where the second configuration information includes resource configuration for performing serving cell measurement at a first time domain position and resource configuration for performing non-serving cell measurement at a second time domain position; and
according to the second configuration information, receiving and measuring a reference signal of the serving cell using a first receiving beam at the first time domain position, and receiving and measuring a reference signal of the non-serving cell using a second receiving beam at the second time domain position.

In a second aspect, the present disclosure provides a method for receiving capability information, which is performed by a first network device, the method comprising:
receiving capability information sent by a user equipment, where the capability information includes a capability of the user equipment to measure a serving cell and a non-serving cell at the same time domain position; and
scheduling the user equipment according to the capability information.

In the method of the present disclosure, the first network device receives capability information sent by the user equipment to obtain the capability of the user equipment to measure the service cell and the non-service cell at the same time domain position, so that the first network device can adaptively schedule the user equipment according to the capability information of the user equipment so as to improve the rationality and accuracy of the scheduling.

In some possible implementations, scheduling the user equipment according to the capability information includes:
determining, according to the capability information, whether the user equipment supports a first capability;
in a case where the user equipment supports the first capability, sending first configuration information to the user equipment, where the first configuration information includes resource configuration for performing serving cell measurement and non-serving cell measurement at the same time domain position;
in a case where the user equipment does not support the first capability, sending second configuration information to the user equipment, where the second configuration information includes resource configuration for performing serving cell measurement at a first time domain position and resource configuration for performing non-serving cell measurement at a second time domain position.

In some possible implementations, determining, according to the capability information, whether the user equipment supports the first capability includes:
determining, according to a value of a set bit in the capability information, whether the user equipment supports the first capability of measuring the serving cell and the non-serving cell at the same time domain position.

In some possible implementations, determining, according to the capability information, whether the user equipment supports the first capability includes:
determining whether the user equipment supports the first capability according to a distance threshold indicated by the capability information and a distance from a second network device of the non-serving cell.

In a third aspect, the present disclosure provides an apparatus for sending capability information, which can be configured to perform the steps performed by the user equipment in the first aspect or any possible design of the first aspect. The user equipment can implement the functions in the above methods in the form of a hardware structure, a software module, or a hardware structure plus a software module.

When the apparatus shown in the third aspect is implemented by the software module, the apparatus may include a transceiver module, where the transceiver module can be configured to support the communication apparatus to perform communication.

When performing the steps described in the first aspect above, the transceiver module is configured to send capability information to a first network device corresponding to a serving cell, and the capability information corresponds to a capability of the user equipment to measure the serving cell and the non-serving cell at the same time domain position.

In a fourth aspect, the present disclosure provides an apparatus for receiving capability information, which can be configured to perform the steps performed by the network device in the second aspect or any possible design of the second aspect. The network device can implement the functions in the above methods in the form of a hardware structure, a software module, or a hardware structure plus a software module.

When the apparatus shown in the fourth aspect is implemented by the software module, the d apparatus may include a transceiver module and a processing module coupled to each other, the transceiver module can be configured to support the communication apparatus to perform communication, and the processing module can be configured for the communication apparatus to perform processing operations, such as generating information/messages to be sent, or processing received signals to obtain information/messages.

When performing the steps described in the second aspect above, the transceiver module is configured to receive capability information sent by the user equipment, where the capability information includes the capability of the user equipment to measure the serving cell and the non-serving cell at the same time domain position.

The processing module is configured to schedule the user equipment according to the capability information.

In a fifth aspect, the present disclosure provides a user equipment, including a processor and a memory; the memory is configured to store a computer program; and the processor is configured to execute the computer program to implement the first aspect or any possible design of the first aspect.

In a sixth aspect, the present disclosure provides a network device, including a processor and a memory; the memory is configured to store a computer program; and the processor is configured to execute the computer program to implement the second aspect or any possible design of the second aspect.

In a seventh aspect, the present disclosure provides a computer-readable storage medium having stored therein instructions (or called a computer programs or a programs) which, when being called and executed on a computer, cause the computer to perform the above first aspect or any possible design of the first aspect.

In an eighth aspect, the present disclosure provides a computer-readable storage medium having stored therein instructions (or called a computer programs or a programs) which, when being called and executed on a computer, cause the computer to perform the above second aspect or any possible design of the second aspect.

It is to be understood that the foregoing general description and the following detailed description are illustrative and explanatory only and are not restrictive of the present disclosure.

### BRIEF DESCRIPTION OF THE DRAWINGS

The drawings described herein are used to provide a further understanding of the embodiments of the present disclosure and constitute a part of the present disclosure. The illustrative embodiments of the embodiments of the present disclosure and the description thereof are used to explain the embodiments of the present disclosure and do not constitute an improper limitation on the embodiments of the present disclosure. In the drawings:

The accompanying drawings herein are incorporated in and constitute a part of the specification, illustrate embodiments consistent with the embodiments of the present disclosure, and together with the description, serve to explain the principles of the embodiments of the present disclosure.
FIG. 1 is a schematic diagram of architecture of a wireless communication system provided by an embodiment of the present disclosure;
FIG. 2 is a schematic diagram showing a measurement scenario according to an illustrative embodiment;
FIG. 3 is a flow chart showing a method for transmitting capability information according to an illustrative embodiment;
FIG. 4 is a flow chart showing a method for sending capability information according to an illustrative embodiment;
FIG. 5 is a flow chart showing another method for sending capability information according to an illustrative embodiment;
FIG. 6 is a flow chart showing another method for sending capability information according to an illustrative embodiment;
FIG. 7 is a flow chart showing a method for receiving capability information according to an illustrative embodiment;
FIG. 8 is a block diagram showing an apparatus for sending capability information according to an illustrative embodiment;
FIG. 9 is a block diagram showing a user equipment according to an illustrative embodiment;
FIG. 10 is a block diagram showing an apparatus for receiving capability information according to an illustrative embodiment; and
FIG. 11 is a block diagram showing a network device according to an illustrative embodiment.

### DETAILED DESCRIPTION

The embodiments of the present disclosure are now further described in conjunction with the accompanying drawings and specific implementations.

Illustrative embodiments will be described in detail herein, examples of which are shown in the accompanying drawings. When the following description refers to the drawings, the same numbers in different drawings represent the same or similar elements unless otherwise indicated. The implementations described in the following illustrative embodiments do not represent all implementations consistent with the embodiments of the present disclosure. Instead, they are merely examples of devices and methods consistent with some aspects of the present disclosure as detailed in the appended claims.

The terms used in the embodiments of the present disclosure are only for the purpose of describing specific embodiments and are not intended to limit the embodiments of the present disclosure. The singular forms of "a", "an" and "the" used in the embodiments of the present disclosure and the appended claims are also intended to include plural forms unless the context clearly indicates other meanings. It should also be understood that the term "and/or" used herein refers to and includes any or all possible combinations of one or more associated listed items.

It should be understood that although the terms first, second, third, etc. may be used to describe various information in the embodiments of the present disclosure, these information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the words "if" as used herein may be interpreted as "at the time of" or "when" or "in response to determining".

The embodiments of the present disclosure are described in detail below, and examples of the embodiments are shown in the accompanying drawings, where the same or similar reference numerals throughout represent the same or similar elements. The embodiments described below with reference to the accompanying drawings are illustrative and are intended to be used to explain the present disclosure, and cannot be understood as limiting the present disclosure.

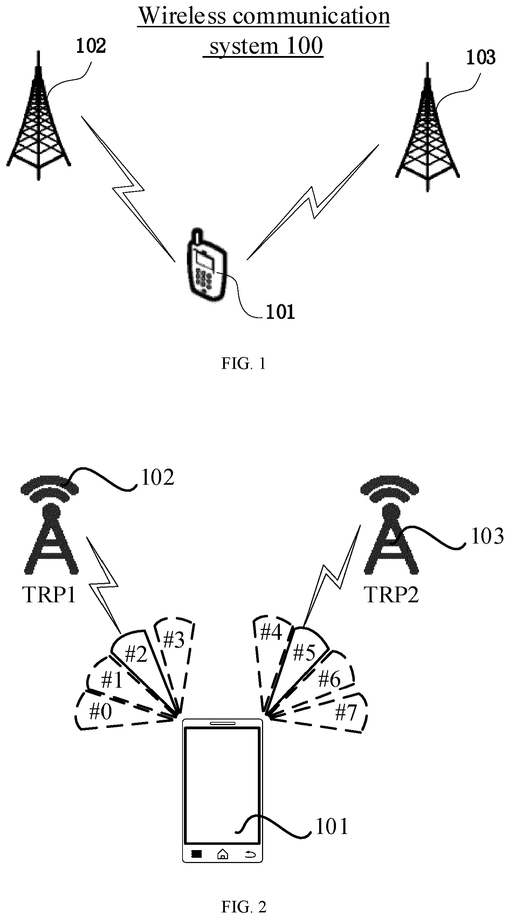

As shown in FIG. 1, a method for transmitting capability information provided by an embodiment of the present disclosure may be applied to a wireless communication system 100, which may include a user equipment 101, a first network device 102, and a second network device 103. The user equipment 101 is configured to support carrier aggregation and may be connected to multiple carrier components of the first network device 102 or the second network device 103, including a primary carrier component and one or more secondary carrier components.

The first network device 102 is a network device corresponding to a serving cell of the user equipment 101, and the second network device 103 is a network device corresponding to a non-serving cell.

It should be understood that the wireless communication system 100 can be applied to both low-frequency scenarios and high-frequency scenarios. Application scenarios of the wireless communication system 100 include, but are not limited to, a long term evolution (LTE) system, a LTE frequency division duplex (FDD) system, a LTE time division duplex (TDD) system, a worldwide interoperability for micro wave access (WiMAX) communication system, a cloud radio access network (CRAN) system, a future fifth-generation (5G) system, a new radio (NR) communication system, a future evolved public land mobile network (PLMN) system, or the like.

The user equipment 101 shown above may be a terminal, an access terminal, a terminal unit, a terminal station, a mobile station (MS), a remote station, a remote terminal, a mobile terminal, a wireless communication device, a terminal agent, a terminal device, or the like. The user equipment 101 can have a wireless transceiving function, and it can perform communication (such as wireless communication) with one or more network devices of one or more communication systems and receive network services provided by the network devices, where the network device includes but is not limited to the first network device 102 or the second network device 103 shown in the figure.

The user equipment (UE) 101 may be a cellular phone, a cordless phone, a session initiation protocol (SIP) phone, a wireless local loop (WLL) station, a personal digital assistant (PDA) device, a handheld device with wireless communication function, a computing device or other processing device connected to a wireless modem, a vehicle-mounted device, a wearable device, a terminal device in a future 5G network, or a terminal device in a future evolved PLMN network, etc.

The first network device 102 or the second network device 103 may be an access network device (or access network point). The access network device refers to a device that provides a network access function, such as a radio access network (RAN) base station, etc. The first network device 102 or the second network device 103 may specifically include a base station (BS), or include a base station and a wireless resource management device for controlling the base station, etc. The network device 102 may also include a relay station (relay device), an access point, a base station in a future 5G network, a base station in a future evolved PLMN network, or an NR base station, etc. The first network device 102 or the second network device 103 may be a wearable device or a vehicle-mounted device. The first network device 102 or the second network device 103 may also be a communication chip having a communication module.

For example, the first network device 102 or the second network device 103 includes but is not limited to: a next-generation base station (gnodeB, gNB) in 5G, an evolved node B (eNB) in an LTE system, a radio network controller (RNC), a node B (NB) in a WCDMA system, a wireless controller in a CRAN system, a base station controller (BSC), a base transceiver station (BTS) in a GSM system or a CDMA system, a home base station (for example, home evolved nodeB, or home node B, HNB), a baseband unit (BBU), a transmission point (transmitting and receiving point, TRP), a transmitting point (transmitting point, TP) or a mobile switching center, etc.

FIG. 2 is a schematic diagram showing a scenario in which a user equipment 101 performs measurement of a serving cell and a non-serving cell, where the network device corresponding to the serving cell is a first network device 102, and the network device corresponding to the non-serving cell is a second network device 103.

As shown in FIG. 2, in a scenario where the user equipment 101 simultaneously measures incoming waves from different directions, in view of the limitation of a baseband processing capability of the user equipment 101, only when the time when a reference signal of the serving cell arrives at the user equipment 101 and the time when a reference signal of the non-serving cell arrive at the user equipment 101 are within a length of a cyclic prefix (CP), the user equipment 101 can process the received signals of the two network devices simultaneously.

Some user equipment 101 may not be able to support the capability of simultaneously measuring the serving cell and the non-serving cell due to insufficient processing capability. Alternatively, because the difference between a distance from the first network device 102 to the user equipment 101 and a distance from the second network device 103 to the user equipment 101 exceeds the simultaneous measurement capability of the user equipment 101, the user equipment 101 cannot simultaneously measure the serving cell and the non-serving cell. Therefore, it is necessary to introduce reporting of the relevant measurement capability of the user equipment 101.

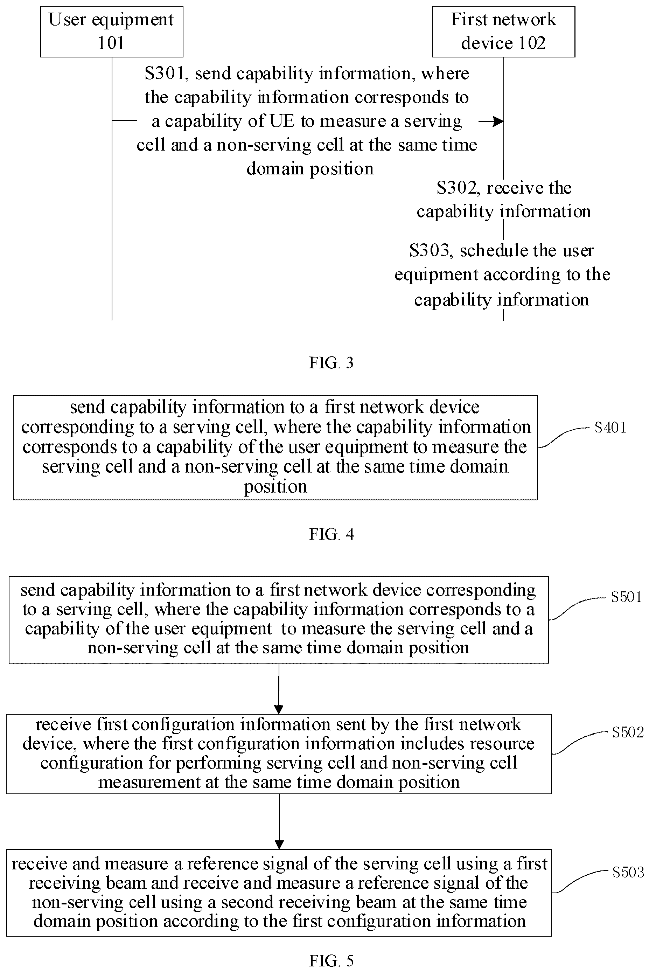

A method for transmitting capability information is provided in an embodiment of the present disclosure. Referring to FIG. 3, FIG. 3 shows a method for transmitting capability information according to an illustrative embodiment. As shown in FIG. 3, the method includes steps S 301 to S 303, specifically as below.

In step S301, a user equipment 101 sends capability information to a first network device 102 corresponding to a serving cell, where the capability information corresponds to a capability of the user equipment 101 to measure the serving cell and a non-serving cell at the same time domain position.

In some possible implementations, the non-serving cell is, for example, a non-serving cell with a different physical cell ID (CDP) from that of the serving cell.

In some possible implementations, the same time domain position (or simultaneously) includes, for example, the same time, the same time interval, the same time slot or the same symbol.

In some possible implementations, the capability information of the user equipment 101 may, for example, indicate whether the first capability is supported, or indicate under what condition the first capability is supported. The first capability corresponds to the capability of simultaneously measuring the serving cell and the non-serving cell, i.e., the CDP. The above condition may be a distance condition, such as the distance condition that a distance between the first network device 102 and the second network device 103 of the CDP needs to satisfy.

In step S302, the first network device 102 receives the capability information.

In step S303, the first network device 102 schedules the user equipment 101 according to the capability information.

In some possible implementations, the first network device 102 may perform different measurement configurations for the user equipment 101 according to the capability information of the user equipment 101, such as whether the user equipment 101 supports the first capability. For example, when the user equipment 101 supports the first capability, the first network device 102 may configure the user equipment 101 to simultaneously measure the serving cell and the CDP so as to reduce the measurement delay.

In the embodiment of the present disclosure, the user equipment 101 sends capability information to the first network device 102 of the serving cell to report its capability of measuring the serving cell and the non-serving cell at the same time domain position. After learning the capability of the user equipment 101, the first network device 102 can adaptively schedule the user equipment 101 according to the capability information of the user equipment 101 to improve the rationality and accuracy of the scheduling.

An embodiment of the present disclosure provides a method for sending capability information, which is performed by a user equipment 101. Referring to FIG. 4, FIG. 4 shows a method for sending capability information according to an illustrative embodiment. As shown in FIG. 4, the method includes step S401, specifically as below.

In step S401, the user equipment 101 sends capability information to a first network device 102 corresponding to a serving cell, where the capability information corresponds to a capability of the user equipment 101 to measure the serving cell and a non-serving cell at the same time domain position.

In some possible implementations, the non-serving cell is, for example, a non-serving cell with a different physical cell ID (CDP) from that of the serving cell.

In some possible implementations, the same time domain position (or simultaneously) includes, for example, the same time, the same time interval, the same time slot or the same symbol.

In some possible implementations, the capability information of the user equipment 101 may, for example, indicate whether the first capability is supported, or indicate under what condition the first capability is supported. The first capability corresponds to the capability of simultaneously measuring the serving cell and the non-serving cell, i.e., the CDP. The above condition may be a distance condition, such as the distance condition that a distance between the first network device 102 and the second network device 103 of the CDP needs to satisfy.

In the embodiment of the present disclosure, the user equipment 101 sends capability information to the first network device 102 of the serving cell to report its capability of measuring the serving cell and the non-serving cell at the same time domain position, so that the first network device 102 can adaptively schedule the user equipment 101 according to the capability information of the user equipment 101, so as to improve the rationality and accuracy of the scheduling.

An embodiment of the present disclosure provides a method for sending capability information, which is performed by a user equipment 101. The method includes step S401', specifically as below.

In step S401', the user equipment 101 sends radio resource control (RRC) signaling to a first network device 102, where the RRC signaling including capability information. The capability information corresponds to a capability of the user equipment 101 to measure a serving cell and a non-serving cell at the same time domain position.

In some possible implementations, the user equipment 101 sends the radio resource control (RRC) signaling to contain or implicitly indicate this capability information.

In the embodiment of the present disclosure, the user equipment 101 reports the capability information to the first network device 102 through the RRC signaling.

An embodiment of the present disclosure provides a method for sending capability information, which is performed by a user equipment 101. The method includes step S401 or step S401', where
the capability information includes a set bit, and the set bit is used to indicate whether the user equipment 101 supports a first capability of measuring the serving cell and the non-serving cell at the same time domain position.

In some possible implementations, the user equipment 101 sends the capability information by sending RRC signaling.

In some possible implementations, when the set bit in the capability information is a first value, it indicates that the user equipment 101 supports the first capability, that is, it can measure the service cell and the non-service cell, i.e., CDP, at the same time; when the set bit in the capability information is a second value, it indicates that the user equipment 101 does not support the first capability, that is, it cannot measure the service cell and CDP at the same time.

In an example, as shown in Table 1, the first value is 1 and the second value is 0.

**Table 1**

| Value of set bit | Whether to support first capability |
|---|---|
| 1 | Yes |
| 0 | No |

In the embodiment of the present disclosure, the user equipment 101 may indicate whether it supports the first capability through the value of the set bit in the capability information.

An embodiment of the present disclosure provides a method for sending capability information, which is performed by a user equipment 101. The method includes step S401 or step S401', where:
the capability information includes a distance threshold, which is used to indicate that when a distance between a first network device corresponding to the serving cell and a second network device corresponding to the non-serving cell is less than or equal to the distance threshold, the user equipment supports the first capability of measuring the serving cell and the non-serving cell at the same time domain position.

In some possible implementations, during the setting or configuration process of the distance threshold S, the distance threshold S may satisfy that when the distance D between the first network device 102 and the second network device 103 is less than or equal to the distance threshold S, the capability of the user equipment 101 supports simultaneous measurement of the serving cell and the CDP. In other words, when the distance D between the first network device 102 and the second network device 103 is less than or equal to the distance threshold S, a difference between the distance between the first network device 102 and the user equipment 101 and the distance between the second network device 103 and the user equipment 101 can still ensure that the time for the reference signal of the serving cell to arrive at the user equipment 101and the time for the reference signal of the non-serving cell to arrive at the user equipment 101 are within the length of the CP. Thus, the capability of the user equipment 101, such as the baseband processing capability, can simultaneously measure the reference signal of the serving cell and the reference signal of the non-serving cell.

In some possible implementations, the user equipment 101 sends the capability information by sending RRC signaling.

In some possible implementations, the distance threshold S may be directly indicated in the capability information.

In some possible implementations, the distance threshold S may be implicitly indicated in the capability information.

In an example, different distance thresholds are indicated through several bits in the capability information. For example, as shown in Table 2, four distance thresholds are indicated in two bits. When the values of the two bits are different, the corresponding distance thresholds are different.

**Table 2**

| Value of two bit | Distance threshold S |
|---|---|
| 00 | S1 |
| 01 | S2 |
| 11 | S3 |
| 10 | S4 |

In some possible implementations, after receiving the capability information, the first network device 102 learns the distance threshold S, and can determine whether the distance D between the first network device 102 and the second network device 103 is greater than the distance threshold S in the capability information. When D>S, the first network device 102 determines that the user device 101 does not support the first capability in this case; when D≤S, the first network device 102 determines that the user device 101 supports the first capability in this case.

In the embodiment of the present disclosure, the user equipment 101 indicates the distance threshold through capability information, so that the first network device 102 can learn when the user equipment 101 supports the first capability according to the distance threshold, and can thus perform adaptive configuration.

An embodiment of the present disclosure provides a method for sending capability information, which is performed by a user equipment 101. Referring to FIG. 5, FIG. 5 shows a method for sending capability information according to an illustrative embodiment. As shown in FIG. 5, the method includes steps S501 to S503, specifically as below.

In step S501, the user equipment 101 sends capability information to a first network device 102 corresponding to a serving cell, where the capability information corresponds to a capability of the user equipment 101 to measure the serving cell and a non-serving cell at the same time domain position.

In some possible implementations, the user equipment 101 sends the capability information by sending RRC signaling.

In some possible implementations, the user equipment 101 indicates whether the user equipment 101 supports the first capability through a set bit in the capability information.

In some possible implementations, the user equipment 101 directly or indirectly indicates a distance threshold S through the capability information, and when a distance D between the first network device 102 and the second network device 103 is less than or equal to S, the user equipment 101 supports the first capability.

In step S502, the user equipment 101 receives first configuration information sent by the first network device 102, where the first configuration information includes resource configuration for performing serving cell and non-serving cell measurement at the same time domain position.

In some possible implementations, the first configuration information may include or indicate one or more of the following parameters: time-frequency resources of a reference signal of the serving cell, time-frequency resources of a reference signal of the non-serving cell, a measured parameter value, spatial domain information corresponding to the measurement (such as which receiving beam is used), measurement delay, etc.

The measured parameter value is a layer 1 parameter, for example, a layer 1 (L1) Reference Signal Received Power (L1-RSRP). It can be understood that in other implementations, the layer 1 parameter may also be a layer 1 Reference Signal Received Quality (L1-RSRQ) or a layer 1 Signal to Interference plus Noise Ratio (L1-SINR).

In step S503, the user equipment 101 receives and measures the reference signal of the serving cell using a first receiving beam and receives and measures the reference signal of the non-serving cell using a second receiving beam at the same time domain position according to the first configuration information.

In some possible implementations, the user equipment 101 may learn, according to the first configuration information, which receiving beam to use to measure the serving cell and the non-serving cell, and the time-frequency resources of the reference signals, so that the reference signals may be received in the corresponding time-frequency resources.

In an example, as shown in FIG. 2, the user equipment 101 receives the reference signal of the serving cell with the first receiving beam (such as receiving beam # 2) at the first time t1, and measures and obtains L1-RSRP of the serving cell. At the same time, the user equipment 1 01 receives the reference signal of the CDP with the second receiving beam (such as receiving beam # 5) at the first time t1, and measures and obtains L1- RSRP of the CDP.

It can be understood that the measurement delay of the user equipment 101 based on the beam level measurement of layer 1 parameters is smaller than the measurement delay based on measurement of the layer 3 parameters.

In the embodiment of the present disclosure, in the scenario where the user equipment 101 supports the first capability, the first network device 102 may send the first configuration information, so that the user equipment 101 may simultaneously measure the serving cell and the CDP using different receiving beams.

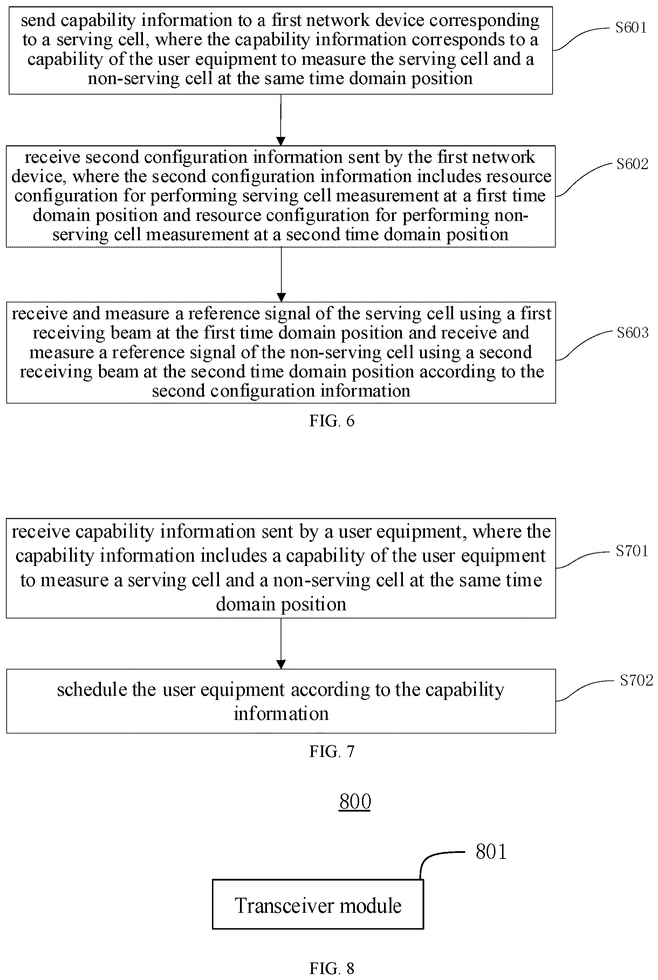

An embodiment of the present disclosure provides a method for sending capability information, which is performed by a user equipment 101. Referring to FIG. 6, FIG. 6 shows a method for sending capability information according to an illustrative embodiment. As shown in FIG. 6, the method includes steps S601 to S603, specifically as below.

In step S601, the user equipment 101 sends capability information to a first network device 102 corresponding to a serving cell, where the capability information corresponds to a capability of the user equipment 101 to measure the serving cell and a non-serving cell at the same time domain position.

In some possible implementations, the user equipment 101 sends the capability information by sending RRC signaling.

In some possible implementations, the user equipment 101 indicates whether the user equipment 101 supports the first capability through a set bit in the capability information.

In some possible implementations, the user equipment 101 directly or indirectly indicates a distance threshold S through the capability information, and when a distance D between the first network device 102 and the second network device 103 is less than or equal to S, the user equipment 101 supports the first capability.

In step S602, the user equipment 101 receives second configuration information sent by the first network device 102, where the second configuration information includes resource configuration for performing serving cell measurement at a first time domain position and resource configuration for performing non-serving cell measurement at a second time domain position.

In some possible implementations, the second configuration information may include or indicate one or more of the following parameters: time-frequency resources of a reference signal of the serving cell, time-frequency resources of a reference signal of the non-serving cell, measured parameter values, spatial information corresponding to the measurement (such as which receiving beam is used), measurement delay, etc. The measured parameter value is a layer 1 parameter, for example, L1-RSRP.

In step S603, the user equipment 101 receives and measures the reference signal of the serving cell using a first receiving beam at the first time domain position and receives and measures the reference signal of the non-serving cell using a second receiving beam at the second time domain position according to the second configuration information.

In some possible implementations, the user equipment 101 measures the serving cell and the CDP respectively at different time domain positions according to the second configuration information.

In an example, as shown in FIG. 2, the user equipment 101 receives the reference signal of the serving cell with the first receiving beam (such as receiving beam # 2) at the first time t1, and measures and obtains L1-RSRP of the serving cell. The user equipment 101 receives the reference signal of the CDP with the second receiving beam (such as receiving beam # 5) at the second time t2, and measures and obtains L1- RSRP of the CDP.

In the embodiment of the present disclosure, in the scenario where the user equipment 101 does not support the first capability, the first network device 102 may send second configuration information so that the user equipment 101 may use different receiving beams to respectively measure the serving cell and CDP at different times.

An embodiment of the present disclosure provides a method for receiving capability information, which is performed by a first network device 102. Referring to FIG. 7, FIG. 7 shows a method for receiving capability information according to an illustrative embodiment. As shown in FIG. 7, the method includes steps S701 to S702, specifically as below.

In step S701, the first network device 102 receives capability information sent by a user equipment 101, where the capability information includes a capability of the user equipment 101 to measure a serving cell and a non-serving cell at the same time domain position.

In some possible implementations, the non-serving cell is, for example, a non-serving cell with a different physical cell ID (CDP) from that of the serving cell.

In some possible implementations, the first network device 102 may receive the capability information sent by the user equipment 101 through RRC signaling.

In some possible implementations, the capability information of the user equipment 101 may, for example, indicate whether the first capability is supported, or indicate under what condition the first capability is supported. The first capability corresponds to a capability of simultaneously measuring the serving cell and the non-serving cell, i.e., the CDP. The above condition may be a distance condition, such as the distance condition that a distance between the first network device 102 and the second network device 103 of the CDP needs to satisfy.

In step S702, the first network device 102 schedules the user equipment 101 according to the capability information.

In some possible implementations, the first network device 102 may perform different measurement configurations for the user equipment 101 according to the capability information of the user equipment 101, such as whether the user equipment 101 supports the first capability. For example, when the user equipment 101 supports the first capability, the first network device 102 may configure the user equipment 101 to simultaneously measure the serving cell and the CDP to reduce the measurement delay.

In the embodiment of the present disclosure, the first network device 102 receives capability information sent by the user equipment 101 to obtain the capability of the user equipment 101 to measure the serving cell and the non-serving cell at the same time domain position, so that the first network device 102 can adaptively schedule the user equipment 101 according to the capability information of the user equipment 101 to improve the rationality and accuracy of the scheduling.

An embodiment of the present disclosure provides a method for receiving capability information, which is performed by the first network device 102.

The method includes steps S701, S702-1 and S702-2, specifically as below.

In step S701, the first network device 102 receives capability information sent by a user equipment 101, where the capability information includes a capability of the user equipment 101 to measure a serving cell and a non-serving cell at the same time domain position.

In step S702-1, the first network device 102 determines whether the user equipment 101 supports a first capability according to the capability information.

In some possible implementations, a set bit in the capability information is used to indicate whether the user equipment 101 supports the first capability.

In some possible implementations, step S702-1 may include the following step S702-11, specifically as below.

In step S702-11, the first network device 102 determines, according to a value of the bit set in the capability information, whether the user equipment 101 supports the first capability of measuring the serving cell and the non-serving cell at the same time domain position.

For example, as shown in Table 1, whether the user equipment 101 supports the first capability is determined according to the value of the set bit.

In some possible implementations, the distance threshold is directly indicated or implicitly indicated in the capability information.

In some possible implementations, step S702-1 may include the following step S702-12, specifically as below.

In step S702-12, the first network device 102 determines whether the user equipment 101 supports the first capability according to the distance threshold indicated by the capability information and a distance from the second network device 103 of the non-serving cell.

For example, after receiving the capability information, the first network device 102 learns the distance threshold S and can determine whether a distance D between the first network device 102 and the second network device 103 is greater than the distance threshold S in the capability information. When D ≤ S, the first network device 102 determines that the user equipment 101 supports the first capability in this case.

In step S702-2, when the user equipment 101 supports the first capability, the first network device 102 sends first configuration information to the user equipment 101, where the first configuration information includes resource configuration for performing serving cell and non -serving cell measurement at the same time domain position.

In some possible implementations, the first configuration information may include or indicate one or more of the following parameters: time-frequency resources of a reference signal of the serving cell, time-frequency resources of a reference signal of the non-serving cell, a measured parameter value, spatial domain information corresponding to the measurement (such as which receiving beam is used), measurement delay, etc. The measured parameter value is a layer 1 parameter, such as L1-RSRP.

Alternatively, the method includes steps S701, S702-1 and S702-3, specifically as below.

In step S701, a first network device 102 receives capability information sent by a user equipment 101, where the capability information includes a capability of the user equipment 101 to measure a serving cell and a non-serving cell at the same time domain position.

In step S702-1, the first network device 102 determines whether the user equipment 101 supports a first capability according to the capability information.

In some possible implementations, a set bit in the capability information is used to indicate whether the user equipment 101 supports the first capability.

In some possible implementations, step S702-1 may include the following step S702-11, specifically as below.

In step S702-11, the first network device 102 determines, according to a value of the bit set in the capability information, whether the user equipment 101 supports the first capability of measuring the serving cell and the non-serving cell at the same time domain position.

For example, as shown in Table 1, whether the user equipment 101 supports the first capability is determined according to the value of the set bit.

In some possible implementations, a distance threshold is directly indicated or implicitly indicated in the capability information.

In some possible implementations, step S702-1 may include the following step S702-12, specifically as below.

In step S702-12, the first network device 102 determines whether the user equipment 101 supports the first capability according to the distance threshold indicated by the capability information and a distance between the first network device 102 and the second network device 103 of the non-serving cell.

For example, after receiving the capability information, the first network device 102 learns the distance threshold S and can determine whether a distance D between the first network device 102 and the second network device 103 is greater than the distance threshold S in the capability information. When D>S, the first network device 102 determines that the user device 101 does not support the first capability in this case.

In step S702-3, when the user equipment 101 does not support the first capability, the first network device 102 sends second configuration information to the user equipment 101, where the second configuration information includes resource configuration for performing serving cell measurement at a first time domain position, and resource configuration for performing non-serving cell measurement at a second time domain position.

In some possible implementations, the second configuration information may include or indicate one or more of the following parameters: time-frequency resources of a reference signal of the serving cell, time-frequency resources of a reference signal of the non-serving cell, a measured parameter value, spatial domain information corresponding to the measurement (such as which receiving beam is used), measurement delay, etc. The measured parameter value is a layer 1 parameter, such as L1-RSRP.

Based on the same concept as the above method embodiments, an embodiment of the present disclosure also provides an apparatus for sending capability information, which can have the functions of the user equipment 101 in the above method embodiments, and can be configured to perform the steps performed by the user equipment 101 provided in the above method embodiments. The functions can be implemented by hardware, or by software or hardware executing corresponding software. The hardware or software includes one or more modules corresponding to the above functions.

In a possible implementation, the apparatus 800 shown in FIG. 8 may serve as the user equipment 101 involved in the above method embodiments, and perform the steps performed by the user equipment 101 in the above method embodiments. As shown in FIG. 8, the apparatus 800 may include a transceiver module 801, where the transceiver module 801 may be configured to support the communication device to perform communication.

When performing the steps implemented by the user equipment 101, the transceiver module 801 is configured to send capability information to a first network device corresponding to a serving cell, where the capability information corresponds to a capability of the user equipment to measure the serving cell and a non-serving cell at the same time domain position.

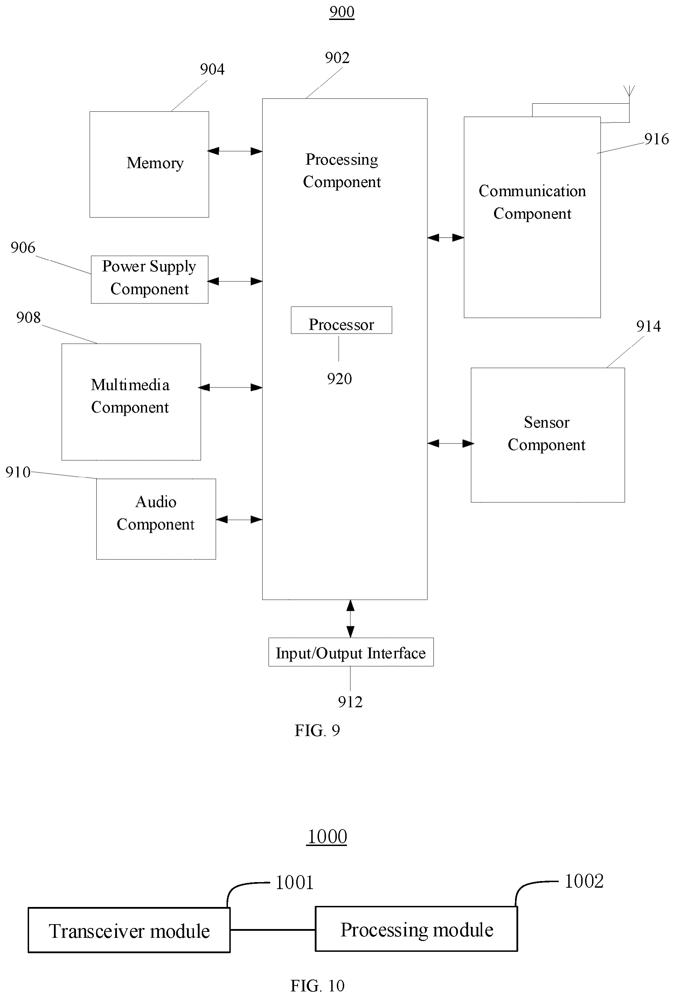

When the apparatus for receiving configuration information is the user equipment 101, its structure may also be as shown in FIG. 9. An apparatus 900 may be a mobile phone, a computer, a digital broadcast terminal, a messaging device, a game console, a tablet device, a medical device, a fitness device, a personal digital assistant, etc.

Referring to FIG. 9, the apparatus 900 may include one or more of the following components: a processing component 902, a memory 904, a power supply component 906, a multimedia component 908, an audio component 910, an input/output (I/O) interface 912, a sensor component 914, and a communication component 916.

The processing component 902 generally controls the overall operation of the apparatus 900, such as operations associated with display, phone calls, data communications, camera operations, and recording operations. The processing component 902 may include one or more processors 920 to execute instructions to complete all or part of the steps of the above methods. In addition, the processing component 902 may include one or more modules to facilitate interaction between the processing component 902 and other components. For example, the processing component 902 may include a multimedia module to facilitate the interaction between the multimedia component 908 and the processing component 902.

The memory 904 is configured to store various types of data to support operations on the apparatus 900. Examples of such data include instructions for any application or method operating on the apparatus 900, contact data, phone book data, messages, pictures, videos, etc. The memory 904 can be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 906 provides power to various components of the apparatus 900. The power supply component 906 may include a power supply management system, one or more power supplies, and other components associated with generating, managing, and distributing power for the apparatus 900.

The multimedia component 908 includes a screen that provides an output interface between the apparatus 900 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, slide, and gestures on the touch panel. The touch sensor may not only sense the boundaries of the touch or slide action, but also detect the duration and pressure associated with the touch or slide operation. In some embodiments, the multimedia component 908 includes a front camera and/or a rear camera. When the apparatus 900 is in an operating mode, such as a shooting mode or a video mode, the front camera and/or the rear camera may receive external multimedia data. The front camera and rear camera each may be a fixed optical lens system or have a focal length and optical zoom capability.

The audio component 910 is configured to output and/or input audio signals. For example, the audio component 910 includes a microphone (MIC), and when the apparatus 900 is in an operation mode, such as a call mode, a recording mode, and a speech recognition mode, the microphone is configured to receive an external audio signal. The received audio signal can be further stored in the memory 904 or sent via the communication component 916. In some embodiments, the audio component 910 also includes a speaker for outputting audio signals.

The I/O interface 912 provides an interface between processing component 902 and peripheral interface modules, such as a keyboard, a click wheel, buttons, etc. These buttons may include but are not limited to: a home button, a volume button, a start button, and a lock button.

The sensor component 914 includes one or more sensors for providing various aspects of status assessment for the apparatus 900. For example, the sensor component 914 can detect the open/closed state of the apparatus 900, the relative positioning of components, such as the display and keypad of the apparatus 900, and the sensor component 914 can also detect the position change of the apparatus 900 or a component of the apparatus 900, the presence or absence of user contact with the apparatus 900, the orientation or acceleration/deceleration of the apparatus 900, and the temperature change of the apparatus 900. The sensor component 914 may include a proximity sensor configured to detect the presence of a nearby object without any physical contact. The sensor component 914 may also include an optical sensor, such as a CMOS or CCD image sensor, for use in imaging applications. In some embodiments, the sensor component 914 may also include an accelerometer, a gyroscope sensor, a magnetic sensor, a pressure sensor, or a temperature sensor.

The communication component 916 is configured to facilitate wired or wireless communication between the apparatus 900 and other devices. The apparatus 900 can access a wireless network based on a communication standard, such as WiFi, 2G or 3G, or a combination thereof. In an illustrative embodiment, the communication component 916 receives a broadcast signal or broadcast-related information from an external broadcast management system via a broadcast channel. In an illustrative embodiment, the communication component 916 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an illustrative embodiment, the apparatus 900 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the above methods.

In an illustrative embodiment, a non-transitory computer-readable storage medium including instructions is also provided, such as a memory 904 including instructions, and the instructions can be executed by the processor 920 of the apparatus 900 to complete the above methods. For example, the non-transitory computer-readable storage medium can be a ROM, a random access memory (RAM), a CD-ROM, a magnetic tape, a floppy disk, an optical data storage device, etc.

Based on the same concept as the above method embodiments, an embodiment of the present disclosure also provides an apparatus for receiving capability information, which can have the functions of the first network device 102 in the above method embodiment, and can be configured to perform the steps performed by the first network device 102 provided in the above method embodiments. The functions can be implemented by hardware, or by software or hardware executing corresponding software. The hardware or software includes one or more modules corresponding to the above functions.

In a possible implementation, an apparatus 1000 shown in FIG. 10 may serve as the first network device 102 involved in the above method embodiments, and perform the steps performed by the first network device 102 in the above method embodiments. As shown in FIG. 10, the apparatus 1000 may include a transceiver module 1001 and a processing module 1002 coupled to each other, where the transceiver module 1001 may be configured to support the communication apparatus to perform communication. The processing module 1002 may be used for the communication device to perform processing operations, such as generating information/messages to be sent, or processing received signals to obtain information/messages.

When performing the steps implemented by the first network device 102, the transceiver module 1001 is configured to receive capability information sent by the user equipment, where the capability information includes a capability of the user equipment to measure a serving cell and a non-serving cell at the same time domain position.

The processing module 1002 is configured to schedule the user equipment according to the capability information.

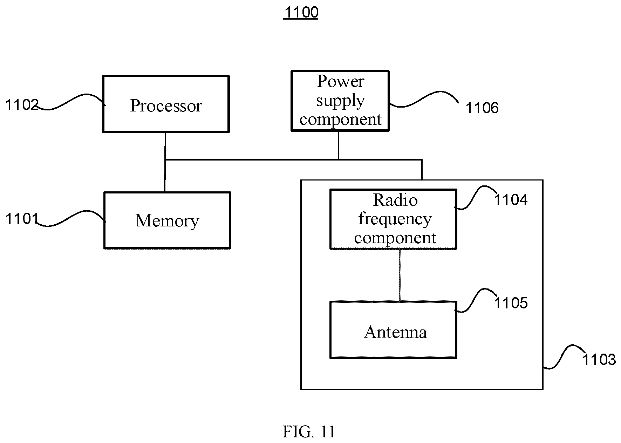

When the communication apparatus is the network device 102, its structure can also be shown in FIG. 11. A base station is taken as an example to illustrate the structure of the communication apparatus. As shown in FIG. 11, the apparatus 1100 includes a memory 1101, a processor 1102, a transceiver component 1103, and a power supply component 1106. The memory 1101 is coupled to the processor 1102, and can be configured to store the programs and data necessary for the communication apparatus 1100 to implement various functions. The processor 1102 is configured to support the communication apparatus 1100 to perform the corresponding functions in the above methods, and the functions can be implemented by calling the program stored in the memory 1101. The transceiver component 1103 can be a wireless transceiver, which can be configured to support the communication apparatus 1100 to receive signaling and/or data and send signaling and/or data through a wireless air interface. The transceiver component 1103 may also be referred to as a transceiver unit or a communication unit. The transceiver component 1103 may include a radio frequency component 1104 and one or more antennas 1105, where the radio frequency component 1104 may be a remote radio unit (RRU), which may be specifically used for transmission of radio frequency signals and conversion between the radio frequency signals and baseband signals, and the one or more antennas 1105 may be specifically used for radiation and reception of radio frequency signals.

When the communication apparatus 1100 needs to send data, the processor 1102 can perform baseband processing on the data to be sent, and then output the baseband signal to the radio frequency unit. The radio frequency unit performs radio frequency processing on the baseband signal and then sends a radio frequency signal in the form of electromagnetic waves through the antenna. When data is sent to the communication apparatus 1100, the radio frequency unit receives the radio frequency signal through the antenna, converts the radio frequency signal into a baseband signal, and outputs the baseband signal to the processor 1102. The processor 1102 converts the baseband signal into data and processes the data.

Those skilled in the art will readily appreciate other implementations of the embodiments of the present disclosure after considering the specification and practicing the disclosure disclosed herein. The present disclosure is intended to cover any variations, uses, or adaptations of the embodiments of the present disclosure, which follow the general principles of the embodiments of the present disclosure and include common knowledge or conventional technical measure in the art that are not disclosed in the present disclosure. The specification and examples are to be considered merely illustrative, and the true scope and spirit of the embodiments of the present disclosure are indicated by the following claims.

It should be understood that the embodiments of the present disclosure are not limited to the precise structures described above and shown in the drawings, and various modifications and changes may be made without departing from the scope thereof. The scope of the embodiments of the present disclosure is limited only by the appended claims.

### Industrial Applicability

In the method disclosed herein, the user equipment sends capability information to the first network device of the serving cell to report its own capability of measuring the serving cell and the non-serving cell at the same time domain position, so that the first network device can adaptively schedule the user equipment according to the capability information of the user equipment to improve the rationality and accuracy of the scheduling.

## Claims

1. A method for sending capability information, performed by a user equipment, the method comprising:
sending capability information to a first network device corresponding to a serving cell, wherein the capability information corresponds to a capability of the user equipment to measure the serving cell and a non-serving cell at a same time domain position.

2. The method according to claim 1, wherein the sending capability information to the first network device corresponding to the serving cell comprises:
sending radio resource control (RRC) signaling to the first network device, wherein the RRC signaling comprises the capability information.

3. The method according to claim 1 or 2, wherein,
the capability information comprises a set bit, and the set bit is used to indicate whether the user equipment supports a first capability of measuring the serving cell and the non-serving cell at the same time domain position.

4. The method according to claim 1 or 2, wherein,
the capability information comprises a distance threshold, the distance threshold is used to indicate that in a case where a distance between the first network device and a second network device corresponding to the non-serving cell is less than or equal to the distance threshold, the user equipment supports a first capability of measuring the serving cell and the non-serving cell at the same time domain position.

5. The method according to any one of claims 1 to 4, wherein the method further comprises:
receiving first configuration information sent by the first network device, wherein the first configuration information comprises resource configuration for performing serving cell measurement and non-serving cell measurement at the same time domain position; and
according to the first configuration information, receiving and measuring a reference signal of the serving cell using a first receiving beam, and receiving and measuring a reference signal of the non-serving cell using a second receiving beam at the same time domain position.

6. The method according to any one of claims 1 to 4, wherein the method further comprises:
receiving second configuration information sent by the first network device, wherein the second configuration information comprises resource configuration for performing serving cell measurement at a first time domain position and resource configuration for performing non-serving cell measurement at a second time domain position; and
according to the second configuration information, receiving and measuring a reference signal of the serving cell using a first receiving beam at the first time domain position, and receiving and measuring a reference signal of the non-serving cell using a second receiving beam at the second time domain position.

7. A method for receiving capability information, performed by a first network device, the method comprising:
receiving capability information sent by a user equipment, wherein the capability information comprises a capability of the user equipment to measure a serving cell and a non-serving cell at a same time domain position; and
scheduling the user equipment according to the capability information.

8. The method according to claim 7, wherein the scheduling the user equipment according to the capability information comprises:
determining, according to the capability information, whether the user equipment supports a first capability;
in a case where the user equipment supports the first capability, sending first configuration information to the user equipment, wherein the first configuration information comprises resource configuration for performing serving cell measurement and non-serving cell measurement at the same time domain position; and
in a case where the user equipment does not support the first capability, sending second configuration information to the user equipment, wherein the second configuration information comprises resource configuration for performing serving cell measurement at a first time domain position and resource configuration for performing non-serving cell measurement at a second time domain position.

9. The method according to claim 8, wherein the determining, according to the capability information, whether the user equipment supports the first capability comprises:
determining, according to a value of a set bit in the capability information, whether the user equipment supports the first capability of measuring the serving cell and the non-serving cell at the same time domain position.

10. The method according to claim 8, wherein the determining, according to the capability information, whether the user equipment supports the first capability comprises:
determining whether the user equipment supports the first capability according to a distance threshold indicated by the capability information and a distance from a second network device of the non-serving cell.

11. An apparatus for sending capability information, configured to be performed by a user equipment, the apparatus comprising:
a transceiver module, configured to send capability information to a first network device corresponding to a serving cell, wherein the capability information corresponds to a capability of the user equipment to measure the serving cell and a non-serving cell at a same time domain position.

12. An apparatus for receiving capability information, configured in a first network device, the apparatus comprising:
receiving capability information sent by a user equipment, wherein the capability information comprising a capability of the user equipment to measure a serving cell and a non-serving cell at a same time domain position; and
scheduling the user equipment according to the capability information.

13. A user equipment, comprising a processor and a memory, wherein the memory is configured to store a computer program, and the processor is configured to execute the computer program to perform the method according to any one of claims 1 to 6.

14. A network device, comprising a processor and a memory, wherein the memory is configured to store a computer program, and the processor is configured to execute the computer program to perform the method according to any one of claims 7 to 10.

15. A computer-readable storage medium having stored therein instructions (or a computer programs, or a program) which, when being called and executed on a computer, cause the computer to perform the method according to any one of claims 1 to 6.

16. A computer-readable storage medium having stored therein instructions (or a computer programs, or a program) which, when being called and executed on a computer, cause the computer to perform the method according to any one of claims 7 to 10.
